# EUROPÄISCHE PATENTSCHRIFT

(11) **EP 3 083 119 B1**
(45) Veröffentlichungstag und Bekanntmachung des Hinweises auf die Patenterteilung: **07.09.2022**
(21) Anmeldenummer: 14795780.7
(22) Anmeldetag: 06.11.2014
(51) Int. Cl.: B23F 23/04, B23Q 7/04

(54) **VERFAHREN ZUM BE- UND ENTLADEN EINES WERKSTÜCKES MIT INNENVERZAHNUNG UND BE- UND ENTLADEVORRICHTUNG**
METHOD FOR MOUNTING AND DISMOUNTING A WORKPIECE HAVING AN INTERNAL TOOTHING, AND MOUNTING AND DISMOUNTING DEVICE
PROCÉDÉ PERMETTANT DE CHARGER ET DE DÉCHARGER UNE PIÈCE POURVUE D'UNE DENTURE INTÉRIEURE ET DISPOSITIF DE CHARGEMENT ET DE DÉCHARGEMENT

(30) Priorität: 17.12.2013 DE 102013021184
(43) Veröffentlichungstag der Anmeldung: 26.10.2016
(73) Patentinhaber: Gleason-Pfauter Maschinenfabrik GmbH, 71636 Ludwigsburg (DE)
(72) Erfinder: PHILIPPIN, Matthias, 71277 Rutesheim (DE)
(74) Vertreter: Leinweber & Zimmermann
(86) Internationale Anmeldenummer: PCT/EP2014/002976
(87) Internationale Veröffentlichungsnummer: WO 2015/090489

(56) Entgegenhaltungen:
- US-A- 3 714 740
- US-A- 4 597 155
- US-A1- 2006 257 221

## Beschreibung

Die Erfindung betrifft ein Verfahren zum Be- und Entladen eines innenverzahnten oder mit einer Innenverzahnung zu versehenden Werkstückes in eine / von einer Aufspannposition, bei dem das Werkstück von einer Halteeinrichtung gehalten in einer Bringbewegung in die Aufspannposition verbracht wird, um aufgespannt eine Innenverzahnungsbearbeitung durch ein einen Bearbeitungsraum einnehmendes Verzahnungswerkzeug zu erfahren, und nach seiner Bearbeitung von der Halteeinrichtung gehalten in einer Rückholbewegung aus der Aufspannposition zurückgeholt wird, sowie eine Be- und Entladevorrichtung.

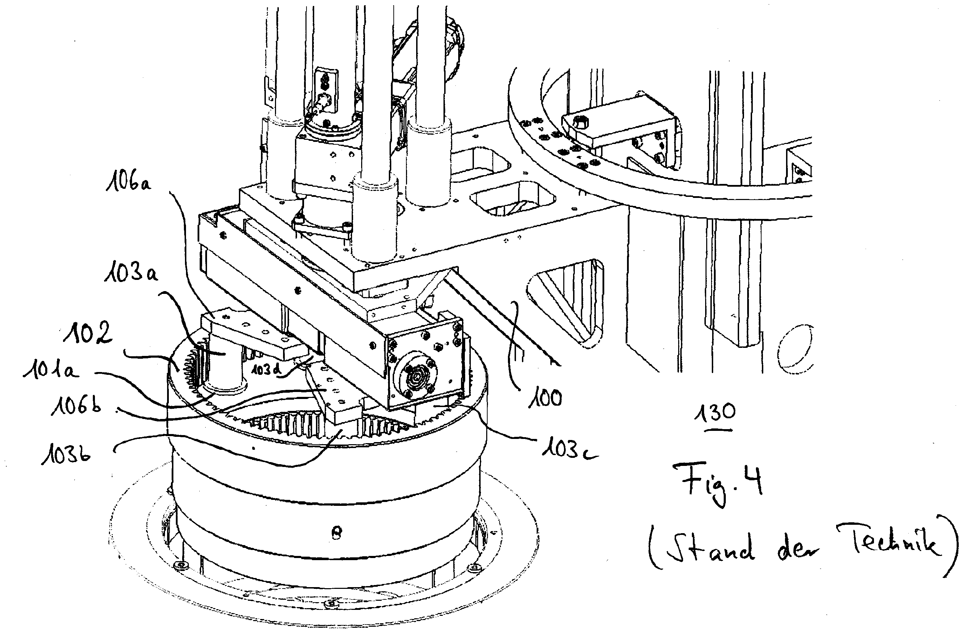

Derartige Verfahren sind in der Technik natürlich gut bekannt. Da die innenverzahnten oder mit einer Innenverzahnung zu versehenden Werkstücke/Werkstückrohlinge, im folgenden sprachlich vereinfachend immer als innenverzahntes Werkstück bezeichnet, von außen aufgespannt werden, werden sie beim Be- und Entladen von der Halteeinrichtung von innen gehalten. Eine derart arbeitende Be- und Entladevorrichtung aus dem Stand der Technik ist in Fig. 4 dargestellt und mit dem Bezugszeichen 130 bezeichnet. Sie umfaßt eine Halteeinheit 100, die mit einer weiteren nicht dargestellten Halteeinheit, die diametral entgegengesetzt angeordnet ist, durch Verschwenken um 180° Positionen tauschen kann, um gemäß dem Ringladerprinzip ein Werkstück 102 in die Aufspannposition zu verbringen, während die jeweils andere Halteeinheit ein soeben bearbeitetes Werkstück 102 aus der Aufspannposition zurückholt und beispielsweise an einen Werkstückförderer übergibt.

Die Halteeinheit 100 weist vier Haltearme 103a, 103b, 103c und 103d auf, an deren freien Enden tellerartige Haltebereiche 101 gebildet sind (am besten zu erkennen Haltebereich 101a), auf denen das Werkstück 102 abgestützt getragen wird. Die Haltearme 103a, 103d sind an der Querträgerplatte 106a befestigt, gegenüber der die mit den Haltearmen 103b, 103c verbundene Querträgerplatte 106b radial zur Werkstückachse beweglich ist, so daß im ausgefahrenen Zustand die in Fig. 4 dargestellte Haltestellung eingenommen werden kann. Durch Verminderung des Abstandes zwischen den Trägerplatten 106a und 106b wird der Haltekontakt gelöst und die Halteeinheit 100 kann durch eine Vertikalbewegung in das oder ein anderes innenverzahntes Werkstück 102 einfahren und daraus ausfahren.

Im Arbeitsablauf führt die Halteeinheit 100 eine Bringbewegung aus, um ein zu bearbeitendes Werkstück 102 in die Aufspannposition zu verbringen. Die nicht dargestellte weitere Halteeinheit holt durch Drehung des Ringladers ein soeben bearbeitetes innenverzahntes Werkstück 102 aus der Aufspannposition zurück. Anschließend erfolgt, je nach verwendeter Drehrichtung des Ringladers, eine Bewegung der Halteeinheit 100, die der Rückholbewegung folgt, oder umgekehrt durchlaufenen Bringbewegung folgt, bis die Halteeinheiten in der 90°-Stellung des Ringladers in eine Parkposition gebracht werden. Dann erfolgt die Innenverzahnungsbearbeitung des in der Aufspannposition aufgespannten Werkstücks 102, während auf der in Fig. 4 nicht dargestellten Seite des Ringladers das beispielsweise auf ein Werkstücktransportband abgelegte bearbeitete Werkstück weitergerückt wird und ein noch unbearbeitetes Werkstück nachrückt.

Bei Verzicht auf das Ringladerprinzip kann ein Be- und Entladen auch über eine Kombination von Linearbewegungen erfolgen, anstelle einer Kombination aus einer Linearbewegung und einer Dreh- bzw. Schwenkbewegung.

Ein an die Hersteller von Verzahnungsmaschinen herangetragener Wunsch liegt in der möglichst effizienten Nutzung der Einsatzzeiten der Verzahnungswerkzeuge, beispielsweise eines zur Herstellung von Innenverzahnungen verwendeten Wälzstoßwerkzeugs oder Wälzschälwerkzeugs. Da das Verzahnungswerkzeug allerdings mit der Verzahnungsbearbeitung erst beginnen kann, wenn der Beladevorgang und der Aufspannvorgang abgeschlossen ist, werden in der Technik vermehrt Drehhalter eingesetzt, welche mehrere Werkstückspindeln tragen. Das Beladen und Aufspannen kann dann an einer Station des Drehladers erfolgen, während ein in dieser Position aufgespanntes, aber bereits um eine Dreheinheit des Drehträgers weitergetaktetes Werkstück zeitparallel durch das Verzahnungswerkzeug bearbeitet werden kann. Der Zeitraum, in dem das Verzahnungswerkzeug dann nicht arbeiten kann ("Chip-to-Chip"-Zeit), ist dann im wesentlichen auf das Weitertakten des die Werkstückspindeln tragenden Drehträgers beschränkt.

Der Erfindung liegt die Aufgabe zugrunde, ein Verfahren der eingangs genannten Art weitergehend zu verbessern, insbesondere mit dem Ziel einer möglichst geringen "Chip-to-Chip"-Zeit, und insbesondere in einer einfach realisierbaren Form.

Diese Aufgabe wird von der Erfindung durch eine Weiterbildung des genannten Verfahrens erreicht, die im wesentlichen dadurch gekennzeichnet ist, daß man die Halteeinrichtung vor der Bearbeitung eine von der Rückholbewegung/umgekehrt durchlaufenen Bringbewegung abweichende, den Bearbeitungsraum freigebende Ausweichbewegung ausführen läßt

Die Erfindung geht somit einen vollkommen anderen Weg als der gegenwärtige Trend zu Multi-Spindel-Systemen. Vielmehr beruht die Erfindung auf der Erkenntnis, daß auch bei mit nur einer Werkstückspindel ausgestatteten Verzahnungsmaschinen Zeiteinsparungen bereits aufgrund einer Ausnutzung von Betrachtungen der Beziehung zwischen den von dem Verzahnungswerkzeug bei der Innenverzahnungsbearbeitung eingenommenen Bearbeitungsraum und der physikalischen Anordnung der Halteeinrichtung ankommt, mit der das Be- und Entladen des innenverzahnten Werkstücks erfolgt. Dabei nutzt die Erfindung weiter die Erkenntnis, daß auch bei vergleichsweise kleinen innenverzahnten Werkstücken trotz des durch den Bearbeitungsraum des Verzahnungswerkzeugs entste-

< US 3,714,740 A offenbart ein beidseitiges Anfasen einer von innen eingespannten Innenverzahnung. > henden Raumbedarf noch verbleibender Raum innerhalb der Innenverzahnung besteht, der nutzbar ist und in Ausführungsformen der Erfindung von der Halteeinrichtung genutzt wird.

Der Bearbeitungsraum des Verzahnungswerkzeuges ist dabei so zu verstehen, daß er den für die gewünschte Innenverzahnungsbearbeitung erforderlichen Raum umfaßt, und zwar hinsichtlich des vom Bearbeitungswerkzeug selbst eingenommenen Raums, aber auch des zu dessen Halten und zu dessen Positionierung erforderlichen Raums.

Im Gegensatz zum Stand der Technik, bei dem die Halteeinrichtung eine der Rückholbewegung entsprechende Bewegung ausführt (oder eine der umgekehrt durchlaufenen Bringbewegung entsprechende Bewegung), in welcher nach der Bringbewegung die Halteeinrichtung mit ihren Haltearmen zunächst werkstückachsparallel zurückgezogen und dann vollständig von dem Werkstück weggedreht oder linear wegbewegt wird, zeichnet sich die Erfindungdurch eine den Bewegungsraum freigebende Ausweichbewegung aus, die von der Rückholbewegung/umgekehrt durchlaufenen Bringbewegung abweicht. . In jedem Fall verringert sich die zwischen Bringbewegung und Bearbeitung des Werkstücks erforderliche Zeitspanne, wie auch die zwischen Bearbeitungsende und Rückholbewegung.

Grundsätzlich ist es im Rahmen der erfindungsgemäßen Ausweichbewegung auch möglich, einen Teil der Rückholbewegung/umgekehrt durchlaufenen Bringbewegung noch auszuführen und die Abweichung danach erfolgen zu lassen. In diesem Fall wird es bevorzugt, wenn Bestandteile der Halteeinrichtung, insbesondere deren Haltebereiche und/oder diese tragende Trägerbereiche bei der Ausweichbewegung in Projektion auf die Normalenebene der dargestellten Achse gesehen wenigstens zum Teil innerhalb der Innenverzahnung verbleiben. Dadurch wird jedenfalls hinsichtlich quer zur Werkstückachse verlaufenden Bewegungsrichtungen eine Zeitersparnis erreicht.

In einer weiteren bevorzugten Ausführungsform wird vorgesehen, daß Bestandteile der Halteeinrichtung, insbesondere deren Haltebereiche und/oder diese tragende Trägerbereiche wenigstens zum Teil innerhalb des von der Innenverzahnung umgebenen Raums verbleiben, insbesondere auch während der Bearbeitung mit dem Verzahnungswerkzeug. Dies erlaubt eine Zeitersparnis auch hinsichtlich parallel zur Werkstückachse verlaufenden Bewegungen der Halteeinrichtungen.

Bei dieser Ausführungsform nutzt man den neben dem Bearbeitungsraum verbleibenden Raum zur Aufnahme von Bereichen der Halteeinrichtung.

Unabhängig von der Art einer Ausweichbewegung offenbart die Erfindung somit auch ein Verfahren zum Be- und Entladen eines innenverzahnten Werkstückes, aber auch ein Verfahren zum Bearbeiten eines innenverzahnten Werkstückes, bei dem zum Halten des Werkstückes bei dessen Be- und/oder Entladen in / aus seiner Aufspannposition beitragende Bestandteile einer Halteeinheit bei der Innenverzahnungsbearbeitung in einem neben dem von dem bei dieser Bearbeitung eingesetzten Verzahnungswerkzeug eingenommenen Bearbeitungsraum im von der Innenverzahnung umschlossenen Raum aufgenommen sind.

Die Anzahl erforderlicher Haltebereiche für ein stabiles Halten des Werkstücks hängt unter anderem von der Orientierung ab, in der die Achse des Werkstückes einzuspannen ist. Insbesondere bei einer nicht horizontalen Werkstückachsenorientierung, etwa einer vertikalen Werkstückachsenorientierung, wird es bevorzugt, daß das Halten des Werkstücks durch wenigstens zwei, bevorzugt wenigstens drei, insbesondere drei Haltebereiche der Halteeinrichtung erfolgt.

Bevorzugt umfaßt die Ausweichbewegung eine Einzelbewegung eines Haltebereichs oder mehrerer Haltebereiche gegenüber einem anderen Haltebereich, insbesondere zweier Haltebereiche gegenüber einem dritten. Beispielsweise läßt sich ein dritter Haltebereich an der dem Bearbeitungsraum entgegengesetzten Stelle des von der Innenverzahnung umgebenen Raums anordnen, so daß dieser Haltebereich ohne Ausweichbewegung auskommen kann. Eine Freigabe des Bearbeitungsraums kann dann durch eine Einzelbewegung eines oder mehrerer, insbesondere zweier anderer Haltebereiche erfolgen.

In diesem Zusammenhang kann eine solche Einzelbewegung in der Normalenebene der Werkstückachse erfolgen, insbesondere mit Komponente quer zur Radialrichtung, und insbesondere in Form einer Linearbewegung ausgeführt werden. Die Achse einer solchen Linearbewegung kann auch parallel zur Achse einer Linear-Ausweichbewegung eines anderen Haltebereichs verlaufen.

In einer weiteren bevorzugten Ausführungsform wird die Ausweichbewegung ohne gemeinsame quer zur Werkstückachse verlaufenden Bewegung aller Haltebereiche der Halteeinrichtung ausgeführt, insbesondere ohne jegliche gemeinsame Bewegung. In diesem Zusammenhang ist eine bloße, den Haltekontakt zwischen der Halteeinrichtung und dem Werkstück lösende Bewegung der Halteeinrichtung, die zu einer Freigabe des Bearbeitungsraums nicht beiträgt, auch nicht als Ausweichbewegung anzusehen. Insbesondere bei einer erfindungsgemäß bevorzugten Gestaltung der Halteeinrichtung nach dem Ringladerprinzip kann auf diese Weise erreicht werden, daß eine andere Halteeinheit der Halteeinrichtung, die gerade nicht an der Aufspannposition tätig ist, sondern an einer anderen, insbesondere diametral entgegengesetzten Anliefer- und Abtransportstation für die Werkstücke, hinsichtlich der azimutalen Position des Ringladers in der Anliefer- und Abfuhrposition verbleiben kann und somit mehr Zeit für das Auswechseln eines bearbeiteten Werkstückes mit einem noch zu bearbeitenden Werkstück verbleibt. Dies kann für Vereinfachungen auf der Anliefer-Abfuhrseite nutzbar sein.

Wie bereits gesagt, wird bei der Erfindung ausdrücklich der Einsatz einer nach dem Ringladerprinzip arbeitenden Be- und Entladevorrichtung bevorzugt. Somit beinhaltet die Bringbewegung und/oder die Rückholbewegung eine gemeinsame Bewegung aller Haltebereiche, insbesondere.eine Drehbewegung eines gemeinsamen Trägers. In diesem Zusammenhang ist hinsichtlich der Wortwahl von Anspruch 1 noch erläuternd darauf hinzuweisen, daß der darin verwendete Ausdruck "Halteeinrichtung" auch mehrere Halteeinheiten umfassen kann, von denen eine Halteeinheit in der Bringbewegung und eine andere Halteeinheit bei der Rückholbewegung zum Einsatz kommt. Der Ausdruck "Halteeinrichtung" ist also so breit zu verstehen, daß keine körperliche Identität eines Haltekräfte ausübenden Bereiches in sowohl der Bringbewegung als auch der Rückholbewegung gefordert wird.

Im Rahmen der Erfindung ist auch vorgesehen, daß vor der Rückholbewegung ein Entgraten des Werkstücks durchgeführt wird, insbesondere an der der Einführseite des Verzahnungswerkzeugs abgewandten Seite. In diesem Zusammenhang ist es in einem weiteren Aspekt nicht erforderlich, daß das Verzahnungswerkzeug für die Innenverzahnungsbearbeitung aus dem von der Innenverzahnung umgebenen Raum ganz oder teilweise herausbewegt wird. Vielmehr können Entgratwerkzeug und Verzahnungswerkzeug und/oder deren Halterungen gemeinsam innerhalb des von der Innenverzahnung umgebenen Raums positioniert sein, wenn das Entgraten erfolgt. In diesem Zusammenhang wird es bevorzugt, daß das Entgraten und die Innenverzahnungsbearbeitung zeitlich hintereinander erfolgen, wobei durchaus, während sich das Werkstück in der Aufspannposition befindet, mehrere Entgrateinsätze denkbar sind.

Dieser Aspekt der Erfindung wird auch als unabhängig von der Art und Weise, wie das Verzahnungswerkzeug freien Zugang zu seinem Bearbeitungsraum erhält, als eigenständig schutzwürdig angesehen. Die Erfindung sieht somit als eigenständig schutzwürdig an und offenbart in unabhängiger Form ein Verfahren zum Herstellen oder Bearbeiten einer Innenverzahnung eines Werkstückes, bei dem zeitlich versetzt ein Entgraten der Zahnkanten der Innenverzahnung ausgeführt wird und das im wesentlichen dadurch gekennzeichnet ist, daß sich das Entgratwerkzeug und/oder dessen Träger während der Innenverzahnungsbearbeitung innerhalb des von der Innenverzahnung umgebenen Raums befindet und/oder sich das die Bearbeitung der Innenverzahnung durchführende Verzahnungswerkzeug und/oder dessen Träger während des Entgratens innerhalb des von der Innenverzahnung umgebenen Raums befindet.

Während es für eine Ausweichbewegung durchaus ausreichend wäre, Einzelbewegungen von Haltebereichen auf orthogonal zur Werkstückachse verlaufende Bewegungen zu beschränken, während eine Lösebewegung zum Lösen der Haltekontakte beispielsweise durch ein gemeinsames Absenken der Haltebereiche erfolgen könnte, wird in einer Ausführungsform der Erfindung vorgesehen, daß sich wenigstens ein Haltebereich unabhängig von einem oder mehreren anderen Haltebereichen mit Bewegungskomponente parallel zur Werkstückachse bewegen läßt.

Diese Eigenschaft kann besonders dann mit Vorteil zum Einsatz kommen, wenn ein Haltebereich der Halteeinrichtung, insbesondere dieser unabhängig bewegbare Haltebereich, durch ein insbesondere scheibenförmiges und insbesondere mitdrehend gelagertes Entgratwerkzeug und/oder dessen Träger gebildet ist. Dieser Aspekt beruht auf der weiteren erfinderischen Erkenntnis, daß ein Bereich der Halteeinrichtung der Be- und Entladevorrichtung eine Doppelfunktion zum Entgraten ausüben kann, oder anders herum gesehen ein Entgratwerkzeug und/oder dessen Träger zum Halten des Werkstückes bei Be- und/oder Entladen genutzt werden kann. Weder muß dann die Halteeinrichtung gesonderte Ausweichbewegungen durchführen, um Platz für das Entgratwerkzeug zu schaffen, noch bestehen bei dieser Variante zeitaufwendige Verfahrwege für das Entgratwerkzeug.

Dieser Aspekt der Erfindung wird ebenfalls unabhängig von der Art der zu bearbeitenden Verzahnung und der Art und Weise, wie der Bearbeitungsraum für das Verzahnungswerkzeug freigehalten/freigemacht wird, als eigenständig schutzwürdig angesehen. Die Erfindung sieht somit als eigenständig schutzwürdig an und offenbart in unabhängiger Weise ein Verfahren zum Be- und Entladen eines verzahnten oder mit einer Verzahnung zu versehenden Werkstückes in eine Aufspannposition, in der auch ein Entgraten von Zahnkanten der Verzahnung erfolgt, bei dem das Entgratwerkzeug und/oder dessen Träger das Werkstück beim Be- und/oder Entladen hält.

Dieser Verfahrensaspekt offenbart darüber hinaus eine synergetische Nutzung vorhandener Bewegungsfreiheitsgrade. Es wird somit weiterhin als eigenständig schutzwürdig angesehen und offenbart in unabhängiger Weise ein Verfahren zum Bearbeiten, Sekundärbearbeiten und/oder Herstellen einer Verzahnung an einem in einer Aufspannposition drehbar aufgespannten rotierenden Werkstück durch ein Bearbeitungswerkzeug, bei dem das Werkstück vor der Bearbeitung in einer Bringbewegung in die Aufspannposition gebracht wird und aus dieser in einer Holbewegung weggebracht wird und bei dem das Bearbeitungswerkzeug zur Bearbeitung eine Positionierbewegung ausführt, das im wesentlichen dadurch gekennzeichnet ist, daß die Bring- und/oder Holbewegung mit der Positionierbewegung einen gemeinsamen Bewegungsfreiheitsgrad aufweist.

Das Entgratwerkzeug selbst könnte natürlich auch einfacher gestaltet sein, beispielsweise durch einen Entgratstahl.

In verfahrenstechnischer Hinsicht offenbart die Erfindung auch ein Verfahren zum Bearbeiten und/oder Herstellen einer Innenverzahnung an einem in einer Aufspannposition aufgespannten Werkstück, bei dem das Werkstück gemäß einem Verfahren der oben erläuterten Art be- und/oder entladen wird.

In vorrichtungstechnischer Hinsicht offenbart die Erfindung eine Be- und Entladevorrichtung für ein innenverzahntes oder mit einer Innenverzahnung zu versehendes Werkstück, mit einer Halteeinrichtung, die das Werkstück bei Ausführung einer das Werkstück in eine Aufspannposition verbringenden Bringbewegung und aus dieser zurückholenden Rückholbewegung hält, und einer die Bewegungen der Halteeinrichtung steuernde Steuereinrichtung, die im wesentlichen dadurch gekennzeichnet ist, daß die Steuereinrichtung dazu ausgelegt ist, die Halteeinrichtung vor einer Innenverzahnungsbearbeitung des Werkstücks mit einem dazu einen Bearbeitungsraum einnehmenden Verzahnungswerkzeug einer von der Rückholbewegung / umgekehrt durchlaufenen Bringbewegung abweichende, den Bearbeitungsraum freigebende Ausweichbewegung ausführen zu lassen und die Halteeinrichtung diese Ausweichbewegung durch Ausgabe von Steuerbefehlen ausführen läßt.

Die Vorteile der erfindungsgemäßen Be- und Entladevorrichtung ergeben sich aus den oben erläuterten Vorteilen des erfindungsgemäßen Verfahrens.

In diesem Zusammenhang ist die Be- und Entladevorrichtung / deren Steuereinrichtung weiter zur Ausführung eines Verfahrens nach einem der weiteren beschriebenen Verfahrensaspekte ausgelegt.

So kann die Halteeinrichtung eine oder mehrere Halteeinheiten aufweisen, die das Werkstück halten können. Insbesondere wird eine Be- und Entladevorrichtung vom Ringlader-Typ vorgesehen, mit wenigstens zwei Halteeinheiten.

Die Halteeinheiten können unabhängig voneinander bewegbar sein. Insbesondere ist vorgesehen, daß eine Halteeinheit unabhängig von einer anderen Halteeinheit der Halteeinrichtung bewegbar ist, insbesondere in einer Bewegungsrichtung mit parallel zur Werkstückachse aufgespannten Werkstückes verlaufenden Richtungskomponente, bevorzugt parallel zur Werkstückachse.

Des weiteren wird bevorzugt vorgesehen, daß eine Halteeinheit zwei oder mehrere Haltearme aufweist, bevorzugt drei oder mehr, insbesondere drei, von denen bevorzugt einer, insbesondere zwei, insbesondere entlang einer gemeinsamen Bewegungsachse, insbesondere dem dritten, beweglich sind, bevorzugt mit Bewegungskomponente quer zur Werkstückachse, insbesondere orthogonal dazu.

Zweckmäßig kann jedoch ein Haltearm gegenüber wenigstens einem anderen Haltearm unabhängig in einer Bewegungsrichtung mit Komponente parallel zur Werkstückachse, insbesondere parallel dazu beweglich sein.

Insbesondere dieser unabhängig bewegliche Haltearm kann als Träger eines insbesondere mitdrehend gelagerten Entgratwerkzeuges vorgesehen werden, wobei auch das Entgratwerkzeug selbst zum Ausüben einer Haltekraft vorgesehen werden kann.

In der Variante kann die Halteeinheit eine 3-Punkt-Abstützung liefern, die über sich gegenüber ihren Haltearmen azimutal über einen größeren Bereich erstreckende Auflagebereiche bewirkt ist, in einer Haltestellung, und die insbesondere in einer Schwenkstellung ein Ausfahren der Halteeinheit aus der Innenverzahnung erleichtert (z.B. nach dem Ablegen in der Abtransportposition).

In einer weiteren bevorzugten Ausführungsform erfolgt das Halten über insbesondere werkstückachsparallele Klemmkräfte, etwa über eine Klemmbacke. In diesem Zusammenhang kann der azimutal gesehene Raumbedarf der Halteeinheit weniger als 180° betragen, insbesondere weniger als 150°, auch weniger als 120°.

Des weiteren ist in vorrichtungstechnischer Hinsicht eine Verzahnungsmaschine unter Schutz gestellt, die eine derartige Be- und Entladevorrichtung aufweist. Bevorzugt handelt es sich bei der Verzahnungsmaschine um eine Wälzschälmaschine oder eine Wälzstoßmaschine, insbesondere eine Wälzschälmaschine.

Weitere Einzelheiten, Merkmale und Vorteile der Erfindung ergeben sich aus der nachfolgenden Beschreibung mit Bezug auf die beiliegenden Figuren, von denen
- Fig. 1: eine Be- und Entladevorrichtung gemäß der Erfindung in einer Lade/Entladestellung zeigt,
- Fig. 2: einen Ausschnitt der Be- und Entladevorrichtung in einer Bearbeitungsstellung zeigt, wobei in Fig. 2a der in Fig. 2b von einem Verzahnungswerkzeug eingenommene Bearbeitungsraum freigelegt dargestellt ist,
- Fig. 3: eine teilweise geschnittene Teilansicht mit einem in Arbeitsstellung positionierten Entgratwerkzeug der Be- und Entladevorrichtung zeigt,
- Fig. 4: eine aus dem Stand der Technik bekannte Be- und Entladevorrichtung zeigt,
- Figur 5: eine abstrakte Darstellung des Erfindungsgedankens zeigt.

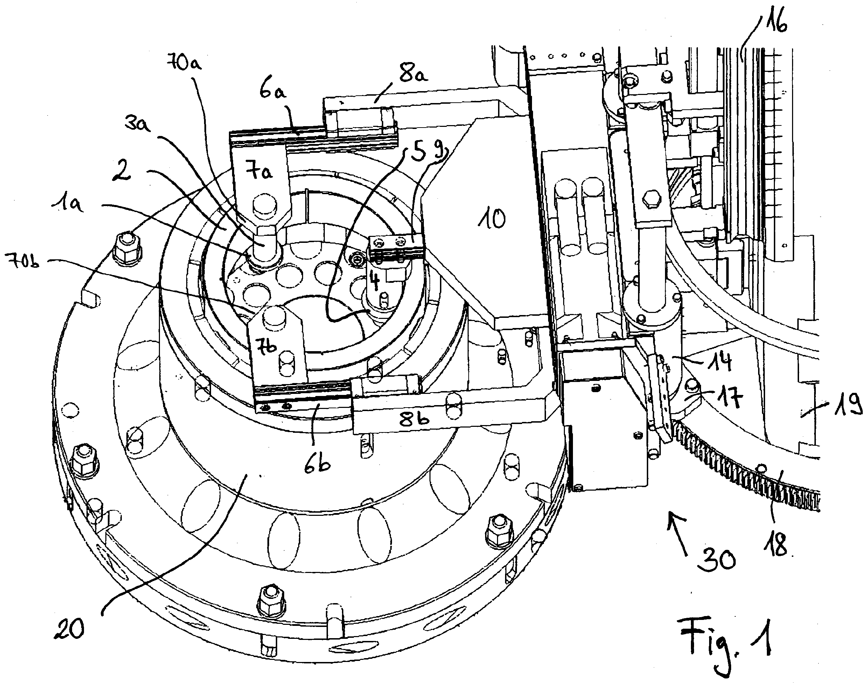

Fig. 1 zeigt in einer perspektivischen Ansicht einen Ausschnitt einer Lade- und Entladevorrichtung 30. in diesem Ausführungsbeispiel wird sie dazu eingesetzt, Werkstückrohlinge aus einer nicht dargestellten Aufnahmeposition aufzunehmen und in eine durch eine Aufspannvorrichtung 20 definierte Aufspannposition zu verbringen, in der eine Innenverzahnung am Werkstück 2 erzeugt wird, beispielsweise im Wälzschälverfahren durch ein Wälzschälwerkzeug. Ein Grundaufbau der Be- und Entladevorrichtung 30 entspricht in diesem Ausführungsbeispiel einem üblichen Ringladersystem, bei der ein Umlaufring 18 um einen säulenartigen Ständer 19 der Be- und Entladevorrichtung 30 verdreht werden kann, um durch Drehung um beispielsweise 180° azimutal gesehen zwischen der Aufspannposition und einer Anliefer- und Abfuhrstation (nicht dargestellt) bewegt werden zu können.

Wenn auch nicht in Fig. 1 dargestellt, ist gegenüberliegend einer ersten Halteeinheit 10 eine weitere Halteeinheit an den Umlaufring 18 angekoppelt. So kann bei der Rückholbewegung eines Werkstückes 2 mit bereits erzeugter Innenverzahnung durch Halteeinheit 10 zeitparallel die andere Halteeinheit bereits in einer Bringbewegung einen nächsten Werkstückrohling 2 in die Aufspannposition verbringen.

In der gezeigten Ausführungsform wird das Werkstück 2 mit in vertikal verlaufender Werkstückachse eingespannt und dazu im Verlauf der Bringbewegung in die Werkzeugaufspannung 20 abgesenkt. Die dazu erforderliche Vertikalbewegung der Halteeinheit 10 wird über eine Vertikalschiene 16 erreicht, entlang der die Bewegung geführt wird. Dabei bewegen sich Buchsen 14 relativ gegenüber mittels einer Montageplatte 17 auf dem Umlaufring 18 festgelegten Führungssäulen.

Das Halten des ringförmigen Werkstücks 2 erfolgt aufgrund der Aufspannung von außen durch ein Halten von innen. Dazu sind in diesem Ausführungsbeispiel drei Haltearme 3a, 3b und 4 vorgesehen, an deren entferntem Ende in diesem Ausführungsbeispiel Auflagebereiche 1a, 1b und 5 angeordnet sind, auf denen das Werkstück 2 während der Bring- und Rückholbewegung aufliegt.

In der Be- und Entladestellung nehmen die Haltearme 3a, 3b und 4 die Formation eines eine kippfreie Lagerung/Halterung des Werkstückes 2 erlaubenden Dreiecks ein. Für eine derartige stabile Halterung bei auf Ausnutzung der Gewichtskraft basierendem Halten des Werkstückes 2 sind allerdings auch andere Varianten denkbar.

Die bewegliche Ankopplung der Haltearme 3a, 3b und 4 an der Halteeinheit 10 ist wie folgt. Seitlich auskragende Träger 8a, 8b, deren gegenseitiger Abstand in diesem Ausführungsbeispiel größer als der Innendurchmesser des Werkstücks 2 ist, tragen an den einander zugewandten Seiten ihrer freien Enden eine Halterung, in der Laufschienen 6a, 6b linear bewegbar geführt sind. An den freien Enden der Laufschienen 6a, 6b ragen Querträger 7a, 7b nach innen, an deren freien Enden die parallel zur Werkstückachse des zu haltenden Werkstücks 2 verlaufenden Haltearme 3a, 3b festgelegt sind. Zentral zwischen den Trägern 8a, 8b angeordnet ist ein Tragarm 9 vorgesehen, der den dritten Haltearm 4 mit Auflagebereich 5 trägt. Eine Zusatzfunktion dieses dritten Arms wird weiter unten erläutert.

Aus Fig. 1 ist zu erkennen, daß der Raum zwischen den im Dreieck formierten Haltearmen 3a, 3b und 4 freigehalten ist. In diesen Freiraum können nun die Haltearme 3a, 3b über eine Verstellbewegung der Trägerschienen 6a, 6b hineinbewegt werden und auf diese Weise einen Freiraum an der der Positionierung des dritten Arms 4 entgegengesetzten Seite des von dem Werkstück 2 umgebenen Ringraums zu schaffen bzw. zu vergrößern.

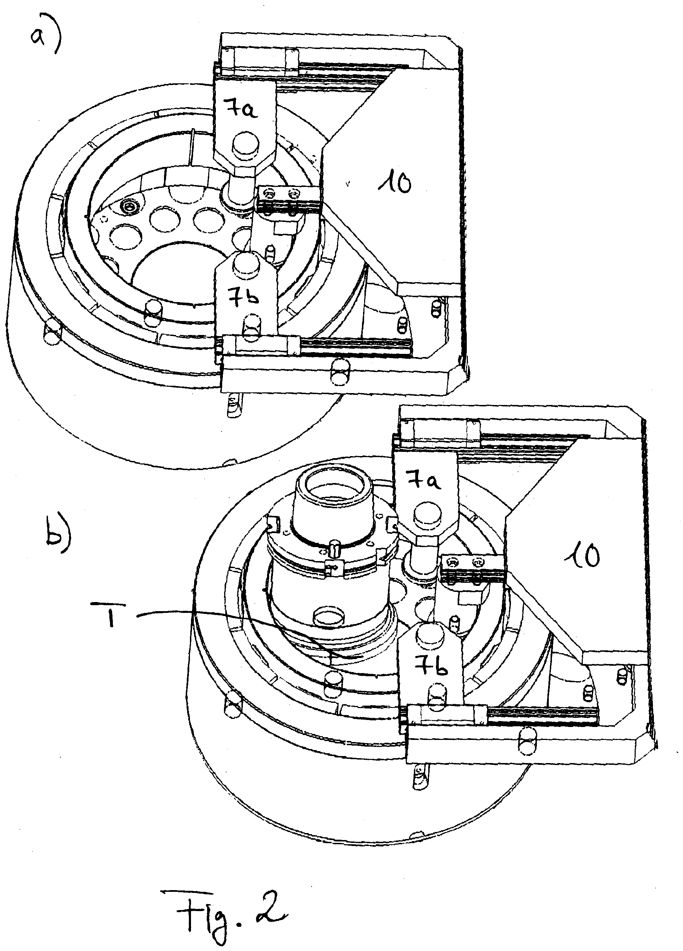

In Fig. 2a ist die von der Halteeinheit 10 eingenommene Stellung gezeigt, in der die Trägerschienen 6a, 6b eingefahren sind. Der dadurch geschaffene Freiraum ist ausreichend für den von dem Bearbeitungswerkzeug T bei der Innenverzahnungsbearbeitung des Werkstücks 2 eingenommener Bearbeitungsraum. In Fig. 2b ist die Situation nochmals dargestellt, mit zusätzlich dargestelltem Bearbeitungswerkzeug T, in diesem Ausführungsbeispiel einem Wälzschälwerkzeug, das zusammen mit einem Aufspannungsbereich der Werkzeugspindel dargestellt ist. Somit ist die Verstellbewegung der Trägerschienen 6a, 6b eine den Bearbeitungsraum des Verzahnungswerkzeugs freigebende Ausweichbewegung.

Für die folgende Beschreibung des Gesamtablaufes aus Beladen, Werkstückbearbeitung und Entladen wird im folgenden vereinfacht davon ausgegangen, die Halteeinheit 10 wäre die einzige Halteeinheit der Be- und Entladevorrichtung 30.

Ausgehend von einer Situation, in der die Halteeinheit 10 kein Werkstück 2 trägt, wird sie durch Drehung des Rings 18 azimutal gesehen in die Anliefer- und Ablieferstation (nicht dargestellt) verbracht. Dort wird die Halteeinheit 10 durch Vertikalbewegung entlang der Schiene 16 bei (zumindest teilweise) eingefahrenen Trägerschienen 6a, 6b in den Innenraum eines Werkstückrohlings 2 abgesenkt, bis die Auflagebereiche 1a, 1b und 5 auf Höhe der nach unten weisenden Stirnfläche des Werkstücks 2 oder darunter zu liegen kommen. Durch eine Ausfahrbewegung der Trägerschienen 6a, 6b wird daraufhin die Dreiecksformation der Haltearme 3a, 3b und 4 erreicht, die eine kippfreie stabile Halterung des Werkstückrohlings 2 liefert.

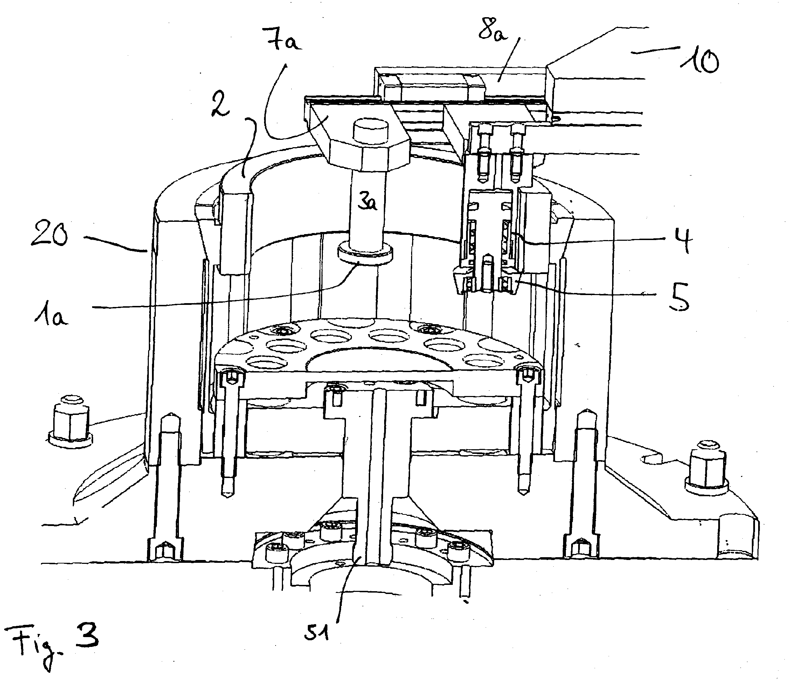

In dieser Be- und Entladestellung erfolgt dann gegebenenfalls das Anheben des Werkstückrohlings 2 aus seiner Anlieferposition und durch Verschwenken der Halteeinheit 10 die azimutal gesehene Positionierung des Werkstückrohlings 2 in die Aufspannposition, die durch Absenken der Halteeinheit 10 in die Aufspannung 20 eingenommen wird. Damit ist die in Fig. 1 dargestellte Situation erreicht und das zu bearbeitende Werkstück 2 wird in üblicher Weise in der Aufspannung 20 aufgespannt, beispielsweise durch Betätigung des in Fig. 3 dargestellten Zugankers 51.

Nun oder auch bereits nach dem Ablegen (und vor dem Spannen) kann die den Bearbeitungsraum für das Verzahnungswerkzeug freigebende Ausweichbewegung erfolgen, wie oben bereits beschrieben durch Verstellbewegung und Einziehen der Trägerschienen 6a, 6b, um die in Fig. 2 dargestellte Wartestellung der Halteeinheit 10 zu erreichen. Für die Bearbeitung des Werkstückes 2, in diesem Ausführungsbeispiel das Erzeugen einer Innenverzahnung mittels des Wälzschälwerkzeugs T, wird bevorzugt vor, während oder nach der Ausweichbewegung wenigstens ein Teil der bestehenden Haltekontakte gelöst, beispielsweise durch ein vertikales Absenken der Halteeinheit 10 als Ganzes, um während der bei der Verzahnungsbearbeitung erfolgenden Werkstückrotation keine ungewollten Kontakte zu erzeugen.

Wie aus Fig. 2 erkennbar, bleibt durch die Ausweichbewegung der Halteeinheit 10 nicht nur der von dem Verzahnungswerkzeug T eingenommene Bearbeitungsraum frei, sondern auch dieser Raum in Projektion auf die zur Normalenebene der Werkstückachse gesehen frei von Bestandteilen der Halteeinheit, obwohl diese sich in diesem Ausführungsbeispiel noch innerhalb des von der Werkstückinnenverzahnung umgebenen Bereichs befinden. Damit läßt sich durch kürzere Bewegungen die Zeit zwischen Beendigung der Verzahnungsbearbeitung und Wiederherstellung der Be- und Entladestellung der Halteeinheit 10 signifikant verkürzen im Vergleich zum Stand der Technik, in welchem die Ausweichbewegung der Rückholbewegung (oder umgekehrt durchlaufenden Bringbewegung) folgt, indem die Haltearme (gegebenenfalls nach bloßem Lösen ihres Haltekontakts) durch werkstückachsenparallelen Hub der Halteeinheit gemeinsam aus dem vom Werkstück umgebenen Raum gehoben und durch beispielsweise Verschwenken in eine auf dem Bringweg / Rückholweg liegende Parkposition gefahren werden, damit die Verzahnungsbearbeitung erfolgen kann.

Gemäß einem weiteren Aspekt kommt der Halteeinheit 10 eine weitere Funktion in Form einer Bearbeitung des Werkstückes 2 hinzu. Dazu ist in diesem Ausführungsbeispiel der dritte Haltearm 4 als Träger eines in diesem Ausführungsbeispiel den Auflagebereich für das Werkstück 2 bildenden Entgratwerkzeuges 5 gebildet. Wie am besten aus Fig. 3 zu erkennen ist, ist das Entgratwerkzeug 5 ein scheibenförmiges, mitdrehend gelagertes Entgratwerkzeug, dessen Lagerung im Haltearm 4 vorgesehen ist. Wie aus Fig. 2 erkennbar ist, ist die Anordnung zum Entgraten somit zeitgleich mit dem Verzahnungswerkzeug T in dem von der Innenverzahnung umschlossenen Raum angeordnet, so daß ein Wechsel zwischen Innenverzahnungsbearbeitung und Entgraten der dabei an den Zahnkanten entstehenden Grate mit nur sehr kurzen Werkzeugbewegungen erreichbar ist. Grundsätzlich ist es beispielsweise denkbar, daß ein Entgraten sogar parallel zur Innenverzahnungsbearbeitung/Herstellung erfolgt, bevorzugt wird jedoch ein sequentielles Arbeiten, bei dem entweder das Verzahnungswerkzeug T die Innenverzahnung fertig erzeugt und das Entgratwerkzeug 5 anschließend entgratet, oder ein Entgraten auch zwischendurch erfolgt beispielsweise, während das Verzahnungswerkzeug T für einen nächsten Bearbeitungsdurchgang zurückgezogen wird. Auch Kombinationen dieser Varianten sind denkbar.

Zu diesem Zweck ist die Trägerschiene 9 gegenüber der Halteeinheit 10 in dieser Ausführungsform parallel zur Werkstückachse verstellbar und kann somit das Entgratwerkzeug 5 in und aus Kontakt mit der zu entgratenden Stirnfläche des innenverzahnten Werkstückes 2 bringen. Zudem ist die Trägerschiene 9 auch axial verstellbar, um den Haltearm 4 mit Auflagebereich 5 auch in einer senkrecht zur Werkstückachse verlaufenden Bewegung in / aus dem Haltekontakt für das Halten des Werkstückes 2 bringen zu können.

In dem gezeigten Ausführungsbeispiel erfolgt die Werkstückaufspannung mit vertikaler Werkstückachse, die Erfindung ist jedoch nicht auf eine solche Anordnung eingeschränkt. Beispielsweise können auch horizontale Werkstückachsaufspannungen vorgesehen werden, grundsätzlich aber auch eine beliebige Werkstückachsorientierung. Zweckmäßigerweise wird das Halten des Werkstücks 2 dann nicht mehr über Auflagebereiche erfolgen, sondern durch radiale, von den Haltearmen 3a, 3b und 4 ausgeübte Haltekräfte.

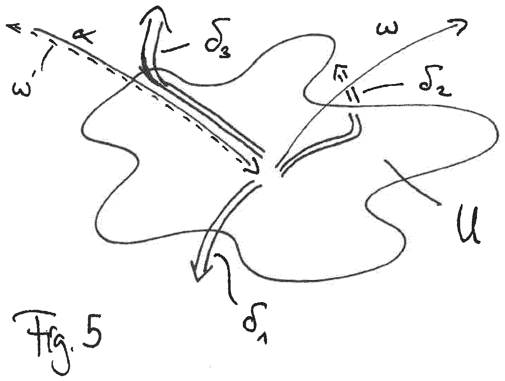

Figur 5 zeigt noch abstrakt drei mögliche Ausweichbewegungen δ1, δ2, δ3 aus dem Bearbeitungsraum U, in die eine Halteeinheit in Bringbewegung α gebracht wird, und zwei Varianten ω, ω' für die Rückholbewegung.

## Patentansprüche

1. Verfahren zum Be- und Entladen eines innenverzahnten oder mit einer Innenverzahnung zu versehenden Werkstückes (2) in eine / von einer Aufspannposition, in welcher das Werkstück von außen aufgespannt wird,
bei dem das Werkstück (2) von einer Halteeinrichtung gehalten in einer Bringbewegung (α) in die Aufspannposition verbracht wird, um aufgespannt eine Innenverzahnungsbearbeitung durch ein einen Bearbeitungsraum (U) einnehmendes Verzahnungswerkzeug (T) zu erfahren, und nach seiner Bearbeitung von der Halteeinrichtung gehalten in einer Rückholbewegung (ω) aus der Aufspannposition zurückgeholt wird,
**dadurch gekennzeichnet, dass** man die Halteeinrichtung (10) vor der Bearbeitung eine von der Rückholbewegung (ω) / umgekehrt durchlaufenen Bringbewegung (-α) abweichende, den Bearbeitungsraum (u) freigebende Ausweichbewegung (δ) ausführen lässt.

2. Verfahren nach Anspruch 1, bei dem das Halten des Werkstücks durch wenigstens zwei, bevorzugt wenigstens drei, insbesondere drei Haltebereiche (1a, 1b, 5) der Halteeinrichtung (10) erfolgt.

3. Verfahren nach Anspruch 2, bei dem die Ausweichbewegung eine Einzelbewegung eines Haltebereichs oder mehrerer Haltebereiche gegenüber einem anderen Haltebereich umfasst, insbesondere zweier Haltebereiche(1a, 1b) gegenüber einem dritten (5).

4. Verfahren nach Anspruch 3, bei dem die Einzelbewegung in der Normalenebene der Werkstückachse erfolgt, insbesondere mit Komponente quer zur Radialrichtung, insbesondere in Form einer Linearbewegung.

5. Verfahren nach einem der vorhergehenden Ansprüche, bei dem die Ausweichbewegung (δ) ohne gemeinsame quer zur Werkstückachse verlaufende Bewegung aller Haltebereiche der Halteeinrichtung ausgeführt wird, insbesondere ohne jegliche gemeinsame Bewegung.

6. Verfahren nach einem der vorhergehenden Ansprüche, bei dem die Bringbewegung und/oder die Rückholbewegung eine gemeinsame Bewegung aller Haltebereiche beinhaltet, insbesondere eine Drehbewegung eines gemeinsamen Trägers (10).

7. Verfahren nach einem der vorhergehenden Ansprüche, bei dem vor der Rückholbewegung ein Entgraten des Werkstücks durchgeführt wird, insbesondere an der der Einführseite des Verzahnungswerkzeugs abgewandten Seite.

8. Verfahren nach einem der vorhergehenden Ansprüche, bei dem sich wenigstens ein Haltebereich (4, 5) unabhängig von einem oder mehreren anderen Haltebereichen (1, 3) mit Bewegungskomponente parallel zur Werkstückachse bewegen lässt.

9. Be- und Entladevorrichtung (30) für ein innenverzahntes oder mit einer Innenverzahnung zu versehendes Werkstück (2), mit einer Halteeinrichtung, die das Werkstück bei Ausführung einer das Werkstück in eine Aufspannposition, in welcher das Werkstück von außen aufgespannt wird, verbringenden Bringbewegung und aus dieser zurückholenden Rückholbewegung hält, und einer die Bewegungen der Halteeinrichtung steuernde Steuereinrichtung,
**dadurch gekennzeichnet, dass** die Steuereinrichtung dazu ausgelegt ist, die Halteeinrichtung vor einer Innenverzahnungsbearbeitung des Werkstücks mit einem dazu einen Bearbeitungsraum einnehmenden Verzahnungswerkzeug einer von der Rückholbewegung / umgekehrt durchlaufenen Bringbewegung abweichende, den Bearbeitungsraum freigebende Ausweichbewegung ausführen zu lassen und die Halteeinrichtung diese Ausweichbewegung durch Ausgabe von Steuerbefehlen ausführen lässt.

10. Be- und Entladevorrichtung nach Anspruch 9, die/deren Steuereinrichtung weiter zur Ausführung eines Verfahrens nach einem der Ansprüche 2 bis 8 ausgelegt ist.

11. Be- und Entladevorrichtung nach Anspruch 9 oder 10, deren Halteeinrichtung eine oder mehrere Halteeinheiten (10) aufweist, die das Werkstück halten können.

12. Be- und Entladevorrichtung nach Anspruch 11, bei der eine Halteeinheit (10) unabhängig von einer anderen Halteeinheit der Halteeinrichtung bewegbar ist, insbesondere in einer Bewegungsrichtung mit parallel zur Werkstückachse des aufgespannten Werkstückes verlaufenden Richtungskomponente, bevorzugt parallel zur Werkstückachse.

13. Be- und Entladevorrichtung nach Anspruch 11 oder 12, bei der eine Halteeinheit zwei oder mehrere Haltearme (3a, 3b, 4) aufweist, bevorzugt drei oder mehr, insbesondere drei, von denen bevorzugt einer, insbesondere zweier, insbesondere entlang einer gemeinsamen Bewegungsachse gegenüber einem anderen, insbesondere dem dritten beweglich sind, bevorzugt mit Bewegungskomponente quer zur Werkstückachse, insbesondere orthogonal dazu.

14. Be- und Entladevorrichtung nach einem der Ansprüche 11 bis 13, bei der sich ein Haltearm (4) gegenüber wenigstens einem anderen Haltearm (3) unabhängig in einer Bewegungsrichtung mit Komponente parallel zur Werkstückachse, insbesondere parallel dazu bewegen lässt.

15. Be- und Entladevorrichtung nach einem der vorhergehenden Ansprüche, bei der ein Haltearm (4) der Halteeinrichtung/einer Halteeinheit Träger eines insbesondere mitdrehend gelagerten Entgratwerkzeuges (5) ist, und insbesondere das Entgratwerkzeug selbst eine Haltekraft ausübt.

16. Verzahnungsmaschine, insbesondere in Form einer Wälzschäl- oder Wälzstoßmaschine, mit einer Be- und Entladevorrichtung nach einem der Ansprüche 9 bis 15.

## Claims

1. A method for loading and unloading an internally toothed workpiece (2) or a workpiece (2) that is to be provided with internal toothing into/out of a clamping position in which the workpiece is clamped externally,
wherein the workpiece (2), held by a retaining device, is brought into the clamping position by means of a conveying movement (α) so that said workpiece, when clamped, has internal toothing cut by a gear cutting tool (T) that occupies a cutting chamber (U) and, after cutting, said workpiece, which is held by the retaining device, is returned from the clamping position by means of a return movement (ω),
**characterised in that**, prior to cutting, the retaining device (10) is allowed to carry out an evasive movement (δ) that is different from the return movement (ω)/reverse conveying movement (-α) and that frees the cutting chamber (u).

2. The method in accordance with claim 1, wherein the workpiece is retained by at least two, preferably at least three, in particular three retaining regions (1a, 1b, 5) of the retaining device (10).

3. The method in accordance with claim 2, wherein the evasive movement comprises an individual movement of one of the retaining regions or several retaining regions relative to another retaining region, in particular of two retaining regions (1a, 1b) relative to a third retaining region (5).

4. The method in accordance with claim 3, wherein the individual movement takes place in the normal plane of the workpiece axis, in particular with a component transverse to the radial direction, in particular in the form of a linear movement.

5. The method in accordance with one of the preceding claims, wherein the evasive movement (δ) is carried out without any common movement of all of the retaining regions of the retaining device transversely to the workpiece axis, in particular without any common movement of any kind.

6. The method in accordance with one of the preceding claims, wherein the conveying movement and/or the return movement includes a common movement of all the retaining regions, in particular a rotational movement of a common carrier (10).

7. The method in accordance with one of the preceding claims, wherein deburring of the workpiece is carried out prior to the return movement, in particular on the side facing away from the insertion side of the gear cutting tool.

8. The method in accordance with one of the preceding claims, wherein at least one retaining region (4, 5) is movable, independently of one or more other retaining regions (1, 3), with a movement component that is parallel to the workpiece axis.

9. A loading and unloading device (30) for an internally toothed workpiece (2) or a workpiece (2) that is to be provided with internal toothing, comprising a retaining device that retains the workpiece during the execution of a conveying movement that brings the workpiece into a clamping position, in which the workpiece is clamped externally, and a return movement that returns the workpiece from said position, and comprising a control device that controls the movements of the retaining device,
**characterised in that** the control device is configured to allow the retaining device to carry out an evasive movement that is different from the return movement/reverse conveying movement and that frees the cutting chamber before internal toothing of the workpiece is cut using a gear cutting tool that occupies a cutting chamber for this purpose, and the retaining device allows this evasive movement to be carried out by outputting control commands.

10. The loading and unloading device in accordance with claim 9, which loading and unloading device/the control device of which loading and unloading device is configured to carry out a method in accordance with one of claims 2 to 8.

11. The loading and unloading device in accordance with claim 13 or 14, the retaining device of which has one or more retaining units (10) that can retain the workpiece.

12. The loading and unloading device in accordance with claim 11, wherein one retaining unit (10) is movable independently of another retaining unit of the retaining device, in particular in a movement direction with a direction component extending parallel to the workpiece axis of the clamped workpiece, preferably in a movement direction parallel to the workpiece axis.

13. The loading and unloading device in accordance with claim 11 or 12, wherein a retaining unit comprises two or more retaining arms (3a, 3b, 4), preferably three or more, in particular three, wherein preferably one, in particular two, of said retaining arms are movable, in particular along a common movement axis relative to another retaining arm, in particular the third retaining arm, preferably with a movement component transverse to the workpiece axis, in particular orthogonal thereto.

14. The loading and unloading device in accordance with claims 11 to 13, wherein one retaining arm (4) is independently movable relative to at least one other retaining arm (3) in a movement direction with a component that is parallel to the workpiece axis, and in particular is movable parallel thereto.

15. The loading and unloading device in accordance with one of the preceding claims, wherein one retaining arm (4) of the retaining device/of a retaining unit carries a deburring tool (5) that is in particular mounted for conjoint rotation, and wherein in particular the deburring tool itself exerts a retaining force.

16. The gear cutting machine, in particular in the form of a power skiving or gear shaping machine, comprising a loading and unloading device in accordance with claims 9 to 15.

## Revendications

1. Procédé permettant de charger une pièce à usiner (2) à denture intérieure ou à pourvoir d'une denture intérieure dans une position de serrage et de l'en décharger, ladite pièce à usiner étant serrée sur l'extérieur,
dans lequel la pièce à usiner (2) retenue par un dispositif de retenue est amenée, au cours d'un mouvement d'amenée (α), dans la position de serrage, afin d'être soumise, à l'état de serrage, à un taillage de denture interne réalisé par un outil à tailler les dentures (T) occupant un espace d'usinage (U) et, après son usinage, ladite pièce est rappelée de la position de serrage au cours d'un mouvement de rappel (ω), toujours retenue par le dispositif de retenue,
**caractérisé en ce qu'**on laisse le dispositif de retenue (10) effectuer, avant l'usinage, un mouvement d'écartement (δ) différent du mouvement de rappel (ω) / de l'inverse du mouvement d'amenée (-α) et dégageant l'espace d'usinage (u).

2. Procédé selon la revendication 1, dans lequel la retenue de la pièce à usiner s'effectue par le biais d'au moins deux, de préférence au moins trois, et notamment exactement trois zones de retenue (1a, 1b, 5) du dispositif de retenue (10).

3. Procédé selon la revendication 2, dans lequel le mouvement d'écartement comprend un mouvement unique d'une zone de retenue ou de plusieurs zones de retenue par rapport à une autre zone de retenue, notamment de deux zones de retenue (1a, 1b) par rapport à une troisième (5).

4. Procédé selon la revendication 3, dans lequel le mouvement unique se produit dans le plan normal de l'axe de la pièce à usiner, notamment avec une composante transversale à la direction radiale, notamment sous la forme d'un mouvement linéaire.

5. Procédé selon l'une quelconque des revendications précédentes, dans lequel le mouvement d'écartement (δ) est réalisé sans mouvement commun, transversalement à l'axe de la pièce à usiner, de toutes les zones de retenue du dispositif de retenue, notamment sans aucun mouvement commun.

6. Procédé selon l'une quelconque des revendications précédentes, dans lequel le mouvement d'amenée et/ou le mouvement de rappel comporte un mouvement commun de toutes les zones de retenue, notamment un mouvement de rotation d'un support commun (10).

7. Procédé selon l'une quelconque des revendications précédentes, dans lequel il est effectué un ébavurage de la pièce à usiner avant le mouvement de rappel, notamment sur son côté détourné du côté d'introduction de l'outil à tailler les dentures.

8. Procédé selon l'une quelconque des revendications précédentes, dans lequel au moins une zone de retenue (4, 5) est déplaçable indépendamment d'une ou plusieurs autres zones de retenue (1, 3) avec une composante de mouvement parallèle à l'axe de la pièce à usiner.

9. Dispositif de chargement et déchargement (30) destiné à une pièce à usiner (2) à denture intérieure ou à pourvoir d'une denture intérieure, comportant un dispositif de retenue retenant la pièce à usiner lors de la réalisation d'un mouvement d'amenée visant à amener la pièce à usiner dans une position de serrage dans laquelle la pièce à usiner est serrée sur l'extérieur, et lors d'un mouvement de rappel visant à la rappeler de cette position, et comportant également un dispositif de commande commandant les mouvements du dispositif de retenue,
**caractérisé en ce que** le dispositif de commande est conçu pour laisser le dispositif de retenue effectuer, avant le taillage de denture intérieure de la pièce à usiner avec un outil à tailler les dentures occupant, à cet effet, un espace d'usinage, un mouvement d'écartement différent du mouvement de rappel / de l'inverse du mouvement d'amenée et dégageant l'espace d'usinage et **en ce qu'**il fait effectuer ce mouvement d'écartement au dispositif de retenue en émettant des commandes.

10. Dispositif de chargement et déchargement selon la revendication 9, qui ou dont le dispositif de commande est conçu pour réaliser un procédé selon l'une des revendications 2 à 8.

11. Dispositif de chargement et déchargement selon la revendication 13 ou 14, dont le dispositif de retenue présente une ou plusieurs unités de retenue (10) qui peuvent retenir la pièce à usiner.

12. Dispositif de chargement et déchargement selon la revendication 11, dans lequel une unité de retenue (10) est déplaçable indépendamment d'une autre unité de retenue du dispositif de retenue, notamment dans une direction de mouvement à composante directionnelle parallèle à l'axe de la pièce à usiner à l'état de serrage, de préférence parallèlement à l'axe de la pièce à usiner.

13. Dispositif de chargement et déchargement selon la revendication 11 ou 12, dans lequel une unité de retenue présente au moins deux bras de retenue (3a, 3b, 4), de préférence au moins trois et notamment exactement trois, dont de préférence l'un et notamment deux sont mobiles notamment le long d'un axe de mouvement commun par rapport à un autre bras, notamment le troisième, de préférence avec une composante de mouvement transversale à l'axe de la pièce à usiner, notamment perpendiculairement à celui-ci.

14. Dispositif de chargement et déchargement selon l'une des revendications 11 à 13, dans lequel un bras de retenue (4) peut se déplacer par rapport à au moins un autre bras de retenue (3) de façon indépendante dans une direction de mouvement à composante parallèle à l'axe de la pièce à usiner, en se déplaçant notamment parallèlement à celui-ci.

15. Dispositif de chargement et déchargement selon l'une quelconque des revendications précédentes, dans lequel un bras de retenue (4) du dispositif de retenue / d'une unité de retenue est porteur d'un outil à ébavurer (5) notamment solidaire en rotation de celui-ci, et dans lequel l'outil à ébavurer exerce notamment lui-même une force de retenue.

16. Machine à tailler les dentures, notamment sous la forme d'une machine de power skiving ou machine à tailler par outil-pignon, dotée d'un dispositif de chargement et déchargement selon l'une des revendications 9 à 15.
